**Europäisches Patentamt**

**European Patent Office**

**Office européen des brevets**

(19)

(11) Numéro de publication: **0 126 674**
**B1**

(12) # FASCICULE DE BREVET EUROPEEN

(45) Date de publication du fascicule du brevet:
**26.08.87**

(51) Int. Cl.⁴: **G 21 C 13/06**

(21) Numéro de dépôt: **84400917.5**

(22) Date de dépôt: **04.05.84**

---

(54) **Dalle de fermeture de la cuve d'un réacteur nucléaire à neutrons rapides.**

---

(30) Priorité: **06.05.83 FR 8307583**

(43) Date de publication de la demande:
**28.11.84 Bulletin 84/48**

(45) Mention de la délivrance du brevet:
**26.08.87 Bulletin 87/35**

(84) Etats contractants désignés:
**BE DE GB IT NL**

(56) Documents cités:
**DE - A - 2 908 969**
**GB - A - 2 090 042**

**NUCLEAR ENGINEERING INTERNATIONAL, vol. 15, no. 172, septembre 1970, pages 714-717; E. DUNCOMBE et al.: "Sodium process instrumentation for the Dounreay PFR"**
**NUCLEAR ENGINEERING INTERNATIONAL, vol. 23, no. 272, juin 1978, pages 43-60; "Construction of the world's first full-scale fast breeder reactor"**

(73) Titulaire: **NOVATOME, La Boursidière R.N. 186, F-92357 Le Plessis Robinson (FR)**

(72) Inventeur: **Malaval, Claude, 115bis avenue du Bois de Verrières, F-92160 Antony (FR)**

(74) Mandataire: **Bressand, Georges et al, c/o CABINET LAVOIX 2 Place d'Estienne d'Orves, F-75441 Paris Cedex 09 (FR)**

---

## Description

L'invention concerne une dalle de fermeture de la cuve d'un réacteur nucléaire à neutrons rapides.

Les réacteurs nucléaires à neutrons rapides comportent généralement une structure en béton comportant un puits de cuve cylindrique à axe vertical à l'intérieur duquel est disposée la cuve principale du réacteur entourée par la cuve de sécurité et fermée par la dalle qui repose sur la partie supérieure du puits de cuve. La cuve principale et la cuve de sécurité du réacteur sont suspendues à la partie inférieure de la dalle qui est constituée par une structure composite en acier et en béton.

Cette structure, telle que décrite dans le GB-A-2 090 042 par exemple, est constituée par une enveloppe annulaire remplie de béton ménageant à sa partie centrale un espace cylindrique pour permettre à la dalle de recevoir le grand bouchon tournant portant l'ensemble des dispositifs de manutention des assemblages combustibles constituant le cœur du réacteur disposés à l'intérieur de la cuve. L'enveloppe annulaire en acier comporte des enveloppes cylindriques coaxiales reliées entre elles par des semelles de forme annulaire et par des plaques planes de renforcement de direction radiale.

De manière générale, on a proposé diverses conceptions de la dalle ainsi que des modes de liaison de cette dalle avec l'enceinte en béton. Ces conceptions sont toutes relativement coûteuses et complexes et mettent en œuvre des poids d'acier importants et de nombreuses soudures. Les liaisons avec l'enceinte en béton du réacteur sont fragiles et difficiles à réaliser et de plus s'accommodent mal des variations de température se produisant pendant le fonctionnement du réacteur. La résistance aux séismes de telles dalles, en particulier leur liaison avec l'enceinte en béton, est également relativement médiocre, ce qui limite leur application sur certains sites.

Le but de l'invention est donc de proposer une dalle de fermeture de la cuve d'un réacteur nucléaire à neutrons rapides dont la structure en béton comporte un puits de cuve cylindrique à axe vertical sur la partie supérieure duquel repose horizontalement la dalle réalisée sous la forme d'une structure composite en acier et en béton qui porte au moins partiellement la cuve suspendue à sa partie inférieure et qui est de forme annulaire et percée d'ouvertures cylindriques pour le passage de composants du réacteur dans le cuve, la structure en acier de la dalle comportant au moins deux enveloppes cylindriques de direction radiale et constituant un caisson qui est rempli de béton, cette dalle de fermeture devant permettre d'en faciliter la fabrication et la mise en place sur le puits de cuve, de supporter dans de bonnes conditions l'effet des variations de température du réacteur en fonctionnement et surtout d'avoir des déplacements en cas de séismes beaucoup plus faibles que les structures antérieures.

Dans ce but, la dalle comporte:

– une première partie annulaire centrale dont le diamètre extérieur est sensiblement égal au diamètre de la cuve comportant de manière connue une virole interne et une virole externe ayant pour axe l'axe du puits de cuve reliées par une semelle inférieure et une semelle supérieure horizontales et comportant de plus deux voiles tronconiques de renforcement ayant pour axe l'axe du puits de cuve et un même angle au sommet reliés, pour l'un à la virole externe par sa grande base et à la semelle inférieure par sa petite base, et pour l'autre, à la semelle supérieure par sa grande base et à la virole interne par sa petite base, la petite base du premier voile tronconique de renforcement ayant sensiblement le même diamètre que la grande base du second voile tronconique de renforcement.

– et une seconde partie annulaire périphérique reliée à la première partie par sa virole externe constituant la virole interne de la seconde partie, de hauteur supérieure à la première partie renforcée par des voiles placés radialement, cette seconde partie venant en appui sur la structure du réacteur par son extrémité inférieure.

Afin de bien faire comprendre l'invention, on va maintenant décrire à titre d'exemple non limitatif, en se référant aux figures jointes en annexe, un mode de réalisation d'une dalle de fermeture de cuve suivant l'invention, dans le cas d'un réacteur nucléaire à neutrons rapides refroidi par du sodium liquide.

La figure 1 est une vue en coupe par un plan vertical d'une dalle suivant l'invention en position au-dessus du puits de cuve du réacteur nucléaire.

La figure 2 est une vue en coupe partielle suivant AA de la figure 1 montrant en particulier un passage de pompe et un passage d'échangeur.

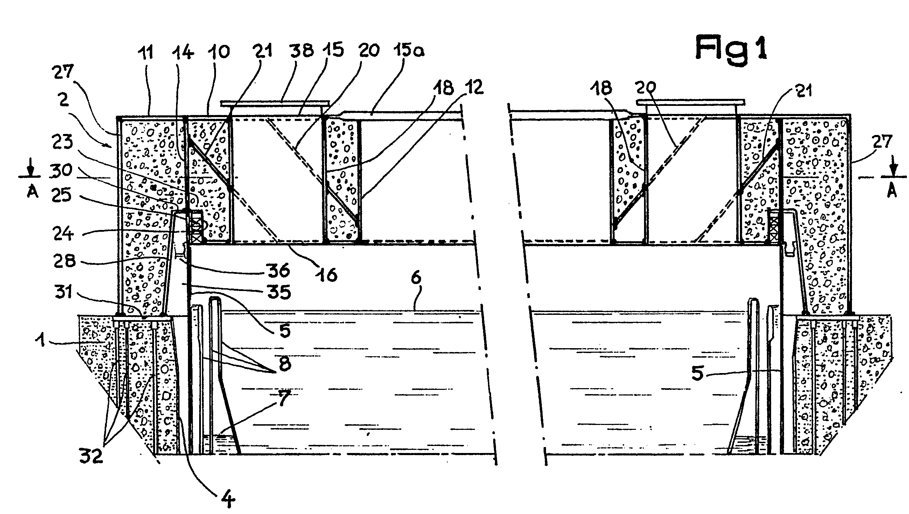

Sur la figure 1 on voit une partie de la structure du réacteur nucléaire 1 correspondant à l'extrémité supérieure du puits de cuve sur lequel repose la dalle désignée de façon générale par le repère 2.

La surface intérieure du puits de cuve est recouverte par une enveloppe métallique 4 jouant le rôle de cuve de sécurité. La cuve principale 5 est suspendue à la partie inférieure de la dalle de la façon qui sera décrite ci-dessous. A l'intérieur de la cuve principale renfermant le sodium est disposée la cuve interne 8 de structure complexe qui permet la séparation du sodium chaud et du sodium froid dont les niveaux ont été représentés respectivement en 6 et en 7.

La dalle est constituée d'une partie annulaire interne 10 et d'une partie annulaire externe 11.

La partie annulaire interne 10 est constituée par une enveloppe en acier de forme annulaire renforcée par des éléments d'entretoisement et renfermant du béton. L'enveloppe de cette partie annulaire 10 comporte une virole interne 12, une virole externe 14, une semelle supérieure 15 et une semelle inférieure 16. A l'intérieur de la virole 12 est logé le grand bouchon tournant portant lui-même le petit bouchon tournant utilisé pour la manutention des assemblages combustibles à l'intérieur de la cuve 5. La semelle supérieure 15 est renforcée dans sa partie 15$_a$, à la périphérie du grand bouchon tournant, pour permettre le support de cet ensemble de masse importante.

2

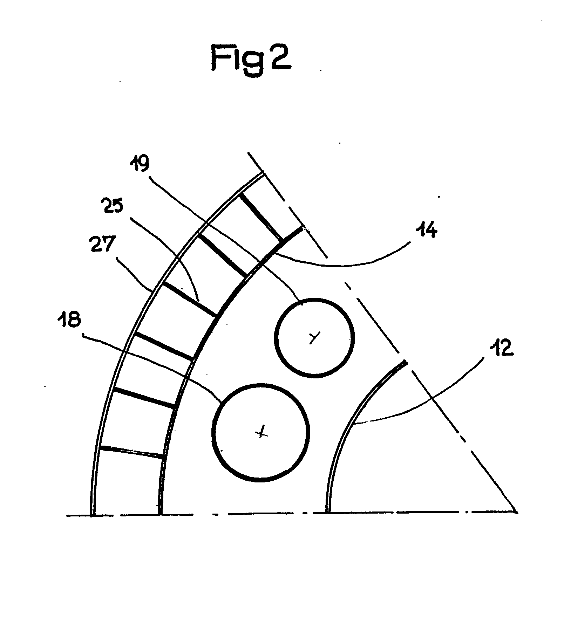

A l'intérieur de cette partie centrale 10 de la dalle sont ménagés des passages de composants comme il est visible sur les figures 1 et 2. Ces passages de composants comportent des passages d'échangeurs de chaleur 18 et des passages de pompes 19. Les passages de pompes et d'échangeurs sont soudés à leur partie supérieure à la semelle supérieure 15 et à leur partie inférieure à la semelle inférieure 16 de la dalle. Ces viroles de passage de composants constituent ainsi des raidisseurs de la structure métallique de la dalle 2.

La structure métallique de la partie centrale de la dalle est d'autre part renforcée par des voiles tronconiques 20 et 21 soudés sur la surface interne de l'enveloppe de la dalle et échancrés au niveau des viroles de passages de composants 18 et 19. Les voiles tronconiques 20 et 21 ont pour axe commun l'axe du puits de cuve.

Le voile tronconique interne de renforcement 20 est soudé le long de sa grande base sur la semelle supérieure 15 et le long de sa petite base sur la surface intérieure de la virole interne 12 de la dalle. Le voile tronconique externe 21 est soudé le long de sa grande base sur la surface interne de la virole externe 14 de la partie centrale 10 de la dalle et le long de sa petite base sur la semelle inférieure 16 de cette partie annulaire centrale de la dalle.

Le diamètre de la grande base du voile interne 20 est sensiblement égal au diamètre de la petite base du voile externe 21, si bien que les deux zones de raccordement circulaires entre les voiles tronconiques et les semelles supérieure et inférieure 15 et 16 de la dalle sont sensiblement disposées à la verticale l'une de l'autre.

La virole externe 14 de la partie centrale 10 de la dalle et la semelle inférieure 16 ne sont pas reliées directement par soudure mais par l'intermédiaire d'une plaque annulaire horizontale 23 et d'une virole 24 ayant comme axe l'axe vertical de la dalle confondu avec l'axe du puits de cuve et commun aux viroles 12 et 14. La virole externe de la partie centrale de la dalle est donc constituée en réalité par les viroles 14 et 24 reliées par la plaque annulaire horizontale 23. La cuve principale 5 du réacteur est soudée à la partie inférieure de la virole externe 14, si bien qu'un espace annulaire 26 est ménagé entre la paroi de la cuve principale 5 et la virole 24 de diamètre un peu inférieur au diamètre de la cuve. L'espace annulaire 26 est rempli d'une matière calorifuge qui permet de réduire les contraintes dues aux gradients thermiques au voisinage de la zone de liaison entre la cuve et la virole 14 et donc d'améliorer la tenue de cette liaison entre la cuve et la dalle lors du fonctionnement du réacteur.

La partie annulaire périphérique 11 de la dalle comporte une enveloppe externe renforcée par des voiles 25 disposés radialement et remplie de béton. Cette seconde partie annulaire 11 de la dalle comporte une virole interne qui n'est autre que la virole externe 14 de la partie centrale 10 de la dalle, et une virole externe 27 coaxiale à la virole 14. L'ensemble des viroles 12, 14 et 27 limitant la dalle sont coaxiales et leur axe commun est celui du puits de cuve, de la dalle et du grand bouchon tournant. Les viroles 14 et 27 sont reliées à leur partie supérieure par le prolongement de la semelle supérieure 15 de la dalle sur laquelle sont également fixés la virole 12 et les passages de composants 18 et 19.

La virole 14 est reliée à sa partie inférieure à une virole tronconique 28 par l'intermédiaire d'une plaque annulaire horizontale 30. Les viroles 27 et 28 sont prolongées vers le bas en-dessous du niveau de la semelle 16 et sont soudées à leur partie inférieure sur une plaque 31 annulaire fixée sur la surface supérieure du puits de cuve. La plaque 31 est fixée par vissage sur des pièces d'extrémité de barres de renforcement 32 noyées dans le béton du puits de cuve.

Un espace annulaire 35 est ménagé entre la virole tronconique 28 et la cuve principale 5 du réacteur. Dans cet espace annulaire est disposée une barrière 36 permettant d'éviter que les courants de convection parviennent jusque dans la zone de liaison entre la cuve et la dalle.

De la description ci-dessus, il apparaît qu'aussi bien la partie annulaire centrale 10 de la dalle que la partie annulaire périphérique 11 sont réalisées sous la forme de caissons entretoisés de grande résistance remplis de béton de protection contre les radiations. Le béton ne joue en effet aucun rôle en ce qui concerne la résistance mécanique de la dalle, cette résistance mécanique étant obtenue par la coopération des deux viroles, des deux semelles, des voiles tronconiques de renforcement et de cheminées de composants, dans le cas de la partie centrale annulaire 10 de la dalle. Les voiles tronconiques qui sont de même axe et parallèles ont des génératrices qui font un angle de 45° avec la verticale, si bien que leur angle au sommet a une valeur de 90°. Ces voiles tronconiques sont soudés non seulement sur les viroles et semelles de la partie 10 de la dalle mais encore sur les cheminées 18 et 19 de composants pour constituer une structure entretoisée complexe de grande résistance.

Au-dessus de chacune des cheminées de composants une bride 38 permet de fixer le composant sur la dalle.

La partie annulaire extérieure 11 de la dalle est renforcée par des voiles plans passant tous par l'axe de la dalle qui est également l'axe de rotation du bouchon tournant. Cette structure entretoisée est également de très grande résistance et l'ensemble des deux parties de la dalle reliées par la virole 14 est lui-même d'une très grande résistance, ce qui permet de réduire considérablement la flèche de cette dalle sous l'action de son propre poids et du poids des composants et du bouchon tournant, par rapport à ce qu'il en est pour les dalles de l'art antérieur.

Cette forme de réalisation de la dalle qui repose sur la partie supérieure du puits de cuve par une semelle qui peut être ancrée sur le puits de cuve permet d'autre part une bien meilleure tenue aux séismes et une absorption des dilatations de la dalle pendant le fonctionnement du réacteur. La dalle, ainsi qu'il a été décrit plus haut, est encastrée dans la structure du réacteur, sa semelle d'appui étant reliée de façon rigide au ferraillage du puits de cuve. La forme et la dimension des éléments de la dalle sont calculées pour obtenir la meilleure tenue possible aux séismes et la meilleure rigidité sous les efforts exercés par le poids des composants et du bouchon tournant.

La cuve principale est reliée directement à une partie de la structure de la dalle, la zone de soudure de la cuve principale à cet élément de la dalle étant située dans une zone protégée contre le dégagement de chaleur du sodium contenu dans la cuve.

Comme dans le cas des dalles de l'art antérieur, la dalle selon l'invention peut être refroidie par des moyens tels qu'une circulation de liquide ou de gaz en contact avec la surface interne de son enveloppe. La partie inférieure de la surface externe du caisson constituant la dalle est également calorifugée comme cela est le cas pour les dalles selon l'art antérieur.

Mais l'invention ne se limite pas au mode de réalisation qui vient d'être décrit.

C'est ainsi que les voiles tronconiques de renforcement de la partie centrale de la dalle peuvent avoir un angle au sommet un peu différent de 90° et donc une inclinaison par rapport à la verticale différente de 45°. Cependant cette disposition symétrique procure des avantages quant à la réalisation de la dalle et à l'obtention d'une structure résistante.

La forme de la partie externe de la dalle peut être un peu différente de la forme qui a été décrite et sa fixation sur la structure du réacteur peut être réalisée autrement que par une semelle liée aux éléments de ferraillage de la structure du puits de cuve.

La dalle peut par exemple être fixée par boulonnage sur une semelle qui est elle-même ancrée dans le béton.

Les caissons et les éléments de renforcement de la dalle peuvent être réalisés en acier de construction faiblement alliés.

Pour réaliser un remplissage par le béton de toutes les parties du caisson constituant la partie centrale de la dalle, on peut prévoir des ouvertures dans les voiles tronconiques de renforcement faisant communiquer la partie supérieure du caisson avec la partie inférieure.

Enfin, la dalle de fermeture de cuve suivant l'invention s'applique dans le cas de tout réacteur nucléaire à neutrons rapides dont la cuve principale est disposée à l'intérieur d'un puits de cuve vertical fermé par une dalle.

**Revendications**

1. Dalle de fermeture de la cuve d'un réacteur nucléaire à neutrons rapides dont la structure en béton comporte un puits de cuve cylindrique (1) à axe vertical sur la partie supérieure duquel repose horizontalement la dalle (2) réalisée sous la forme d'une structure composite en acier et en béton qui porte au moins partiellement la cuve (5) suspendue à sa partie inférieure et qui est de forme annulaire et percée d'ouvertures cylindriques (18, 19) pour le passage de composants du réacteur nucléaire dans la cuve (5), la structure en acier de la dalle comportant au moins deux enveloppes cylindriques coaxiales reliées entre elles par des semelles de forme annulaire et éventuellement par des plaques planes de direction radiale et constituant un caisson qui est rempli de béton, caractérisée par le fait qu'elle comporte:

– une première partie annulaire (10) centrale dont le diamètre extérieur est sensiblement égal au diamètre de la cuve (5) comportant de manière connue une virole interne (12) et une virole externe (14) ayant pour axe l'axe du puits de cuve reliées par une semelle inférieure (16) et une semelle supérieure (15) horizontales comportant de plus deux voiles tronconiques de renforcement (20, 21) ayant pour axe l'axe du puits de cuve et un même angle au sommet reliés, pour l'un, à la virole externe (14) par sa grande base et à la semelle inférieure (16) par sa petite base, et pour l'autre, à la semelle supérieure (15) par sa grande base et à la virole interne (12) par sa petite base, la petite base du premier voile tronconique de renforcement (21) ayant sensiblement le même diamètre que la grande base du second voile de renforcement (20),

– et une seconde partie annulaire périphérique (11) reliée à la première partie par sa virole externe (14) constituant la virole interne de la seconde partie (11), de hauteur supérieure à la première partie, renforcée par des voiles plans (25) placés radialement, cette seconde partie (11) étant en appui sur la structure (1) du réacteur par sa partie inférieure.

2. Dalle de fermeture suivant la revendication 1, caractérisée par le fait que la cuve (5) du réacteur est soudée à l'extrémité inférieure de la virole (14) commune aux deux parties de la dalle.

3. Dalle de fermeture suivant la revendication 2, caractérisée par le fait que la virole (14) commune aux deux parties de la dalle a une hauteur inférieure à la distance entre la semelle supérieure et la semelle inférieure de la cuve, qu'elle est reliée directement à la semelle supérieure et par l'intermédiaire d'une virole (24) de plus faible diamètre à la semelle inférieure (16), l'espace ménagé entre la cuve principale et la virole de plus faible diamètre (24) étant rempli par un matériau calorifuge.

4. Dalle de fermeture suivant l'une quelconque des revendications 1, 2 et 3, caractérisée par le fait que la seconde partie annulaire périphérique (11) de la dalle comporte une virole cylindrique externe (27) reliée à sa partie supérieure à la semelle supérieure (15) de la dalle, de hauteur supérieure à la hauteur de la partie centrale de la dalle et une virole tronconique interne (28) reliée à la partie inférieure de la virole (14) commune aux deux parties de la dalle, les viroles (27 et 28) de la partie périphérique (11) de la dalle étant reliées à leur partie inférieure à une semelle d'appui (31) de celle-ci sur le puits de cuve.

5. Dalle de fermeture suivant la revendication 4, caractérisée par le fait que la semelle d'appui (31) de la dalle est fixée de manière rigide sur des éléments de ferraillage (32) du béton du puits de cuve.

6. Dalle de fermeture selon la revendication 4, caractérisée par le fait que l'extrémité inférieure de la partie périphérique (11) de la dalle est fixée par boulonnage sur une semelle elle-même ancrée dans le béton du puits de cuve.

7. Dalle de fermeture suivant l'une quelconque des revendication 1 à 6, caractérisée par le fait que les voiles de renforcement (20, 21) de la partie centrale (10) de la dalle ont un angle au sommet voisin de 90°, leurs génératrices faisant un angle voisin de 45° avec la verticale.

8. Dalle de fermeture suivant l'une quelconque des revendications 1 à 7, caractérisée par le fait que les passages de composants dans la dalle sont constitués par des viroles cylindriques (18, 19) fixées par soudage sur la semelle supérieure et sur la semelle inférieure à chacune de leurs extrémités et sur les voiles tronconiques de renforcement, le long d'ouvertures prévues dans ceux-ci pour le passage des composants.

9. Dalle de fermeture suivant l'une quelconque des revendications 1 à 8, caractérisée par le fait que les voiles tronconiques (20, 21) de renforcement de la partie centrale (10) de la dalle sont percés d'ouvertures pour le remplissage de la dalle en béton de protection.

10. Dalle de fermeture suivant l'une quelconque des revendications 1 à 9, caractérisée par le fait que les viroles (12, 14, 18, 24, 28), les semelles (15, 16) et les voiles de renforcement (20, 21, 25) sont réalisés en un acier de construction faiblement allié.

**Patentansprüche**

1. Verschlusseinrichtung des Behälters eines Schnellen-Brüter-Reaktors, dessen Betonunterbau einen Schacht für einen zylindrischen Behälter (1) mit vertikaler Achse aufweist, auf dessen oberem Bereich horizontal die Verschlussvorrichtung (2) ruht, die in Form einer stahlarmierten Betonstruktur hergestellt ist, die mindestens teilweise den Behälter (5) trägt, der an ihrer Unterseite eingehangen ist und wobei die Abschlussvorrichtung ringförmig und mit zylinderförmigen Öffnungen (18, 19) ausgestaltet ist, die zum Durchgang von Kernreaktorbestandteilen in den Behälter (5) vorgesehen sind, wobei die Stahlstruktur der Abschlussvorrichtung mindestens zwei koaxiale, untereinander verbundene Zylindermäntel aufweist und die Verbindung in Form von ringförmigen Platten und gegebenenfalls durch ebene Platten in Radialrichtung, die einen Kasten, der mit Beton gefüllt ist, bilden, ausgeführt sind, gekennzeichnet durch:

– einen ersten ringförmigen zentralen Bereich (10), dessen Aussendurchmesser im wesentlichen gleich dem Durchmesser des Behälters (5) ist, der in bekannter Weise einen inneren Gussring (12) und einen äusseren Gussring (14) aufweist, deren Achse die Achse des Behälterschachts ist, und die untereinander mit einer unteren horizontalen Platte (16) und einer oberen horizontalen Platte (15) verbunden sind, die zusätzlich zwei kegelstumpfförmige Verstärkungsrippen (20, 21) aufweisen, deren Achse die Behälterschachtachse ist und die denselben spitzen Winkel haben und einerseits an dem äusseren Gussring (14) mit der grossen Basis und an der unteren Platte (16) mit der kleinen Basis und andererseits an der oberen Platte (15) mit der grossen Basis und mit dem inneren Gussring (12) mit der kleinen Basis verbunden sind, wobei die kleine Basis der ersten kegelstumpfförmigen Verstärkungsrippe (21) etwa den gleichen Durchmesser hat wie die grosse Basis der zweiten Verstärkungsrippe (20), und

– einen zweiten ringförmigen peripheren Bereich (11), der mit dem ersten Bereich über seinen äusseren Gussring (14) verbunden ist, der den inneren Gussring des zweiten Bereichs (11) darstellt, wobei der zweite Bereich eine grössere Höhe als der erste Bereich hat und durch ebene Rippen (25) verstärkt ist, die radial angeordnet sind, wobei der zweite Bereich (11) auf dem Reaktorunterbau (1) mit ihrer Unterseite aufliegt.

2. Abschlussvorrichtung nach Anspruch 1, dadurch gekennzeichnet, dass der Behälter (5) des Reaktors am Unterende des den beiden Bereichen der Vorrichtung gemeinsamen Gussrings (14) angeschweisst ist.

3. Abschlussvorrichtung nach Anspruch 2, dadurch gekennzeichnet, dass der den beiden Bereichen der Vorrichtung gemeinsame Gussring (14) eine Höhe hat, die kleiner als der Abstand zwischen der oberen Platte und der unteren Platte des Behälters ist, dass der Gussring direkt an der oberen Platte befestigt ist und über einen Gussring (24) mit einem Durchmesser, der kleiner als der der unteren Platte (16) ist, und dadurch, dass der Raum zwischen dem Hauptbehälter und dem Gussring mit kleinerem Durchmesser (24) mit Hilfe eines wärmedämmenden Materials aufgefüllt ist.

4. Abschlussvorrichtung nach einem der Ansprüche 1, 2 und 3, dadurch gekennzeichnet, dass der zweite periphere ringförmige Teil (11) der Vorrichtung einen äusseren zylindrischen Gussring (27) aufweist, der in seinem oberen Bereich mit der oberen Platte (15) der Vorrichtung verbunden ist, dessen Höhe grösser als die Höhe des zentralen Bereichs der Vorrichtung ist und dadurch, dass ein innerer kegelstumpfförmiger Gussring (28) an dem unteren Bereich des den beiden Teilen der Vorrichtung gemeinsamen Gussrings (14) verbunden ist, wobei die Gussringe (27 und 28) des peripheren Bereichs (11) der Vorrichtung an ihrem unteren Bereich mit einer Auflageplatte (31) für deren Auflage auf dem Behälterschacht verbunden sind.

5. Abschlussvorrichtung nach Anspruch 4, dadurch gekennzeichnet, dass die Auflageplatte (31) der Vorrichtung starr auf den Armierungselementen (32) des Betons des Behälterschachtes befestigt ist.

6. Abschlussvorrichtung nach Anspruch 4, dadurch gekennzeichnet, dass das untere Ende des peripheren Bereichs (11) der Vorrichtung durch Verschraubung auf einer Platte befestigt ist, die selbst in dem Beton des Behälterschachts verankert ist.

7. Abschlussvorrichtung nach einem der Ansprüche 1 bis 6, dadurch gekennzeichnet, dass die Verstärkungsrippen (20, 21) des mittleren Bereichs (10) der Vorrichtung einen spitzen Winkel von etwa 90° aufweisen, wobei deren erzeugenden mit der vertikalen einen Winkel im Bereich von 45° einschliessen.

8. Abschlussvorrichtung nach einem der Ansprüche 1 bis 7, dadurch gekennzeichnet, dass die Durchgangsöffnungen für die Bauelemente in der Vorrichtung aus zylinderförmigen Gussringen (18, 19) bestehen, die auf der oberen und unteren Platte jeweils an ihren Enden und an den kegelstumpfförmigen Verstärkungsrippen entlang vorgesehener Öffnungen in diesen für den Durchgang der Bauelemente angeschweisst sind.

9. Abschlussvorrichtung nach einem der Ansprüche 1 bis 8, dadurch gekennzeichnet, dass die kegelstumpfförmigen Verstärkungsrippen (20, 21) für den zentralen Bereich (10) der Vorrichtung mit Öffnungen zum Auffüllen der Vorrichtung mit Schutzbeton versehen sind.

10. Abschlussvorrichtung nach einem der Ansprüche 1 bis 9, dadurch gekennzeichnet, dass die Gussringe (12, 14, 18, 24, 28) die Platten (15, 16) und die Verstärkungsrippen (20, 21, 25) aus einem schwach legierten Baustahl gefertigt sind.

**Claims**

1. Slab for closing the vessel of a fast neutron nuclear reactor the structure of which, made of concrete, incorporates a cylindrical vessel well (1) with a vertical axis on the upper part of which rests horizontally the slab (2) consisting of a composite structure of steel and concrete which at least partially carries the vessel (5) suspended from its lower part and which is annular in shape and pierced with cylindrical openings (18, 19) for the passage of components of the nuclear reactor into the vessel (5), the steel structure of the slab comprising at least two axial cylindrical shells connected each to the other by annular sole plates and eventually by plates radial in direction and constituting a caisson which is filled with concrete, characterized in that it comprises:

– a first annular central part (10) the outer diameter of which is substantially equal to the diameter of the vessel (5) comprising, in a known manner, an inner shell (12) and an outer shell (14) having the axis of the well as their axis and connected by a horizontal lower sole plate (16) and a horizontal upper sole plate (15) and further comprising two frustoconical strengthening webs (20, 21) having the axis of the vessel well as their axis and the same angle at the top, one of which is connected to the outer shell (14) by its large base and to the lower sole plate (16) by its small base and the other to the upper sole plate (15) by its large base and to the inner shell (12) by its small base, the small base of the first frustoconical strengthening web (21) having substantially the same diameter as the large base of the second strengthening web (20), and

– a second peripheral annular part (11) connected to the first part by its outer shell (14) forming the inner shell of the second part (11), of greater height than the first part, strengthened by flat webs (25) placed radially, this second part (11) bearing with its lower part on the reactor structure (1).

2. Closing slab as claimed in claim 1, characterized in that the vessel (5) is welded to the lower end of the shell (14) common to both parts of the slab.

3. Closing slab as claimed in claim 2, characterized in that the shell (14) common to both parts of the slab has a height smaller than the distance between the upper sole plate and the lower sole plate of the vessel, is connected directly to the upper sole plate and through the intermediary of a shell (24) of a smaller diameter to the lower sole plate (16), the space left between the main vessel and the shell of smaller diameter (24) being filled with a heat-insulating material.

4. Closing slab as claimed in any one of claims 1, 2 and 3, characterized in that the second peripheral annular part (11) of the slab comprises an outer cylindrical shell (27) connected at its upper part to the upper sole plate (15) of the slab, of a height greater than the height of the central part of the slab and a frustoconical inner shell (28) connected to the lower part of the shell (14) common to both parts of the slab, the shells (27 and 28) of the peripheral part (11) of the slab being connected at their lower part to a sole plate (31) for resting the slab on the vessel well.

5. Closing slab as claimed in claim 4, characterized in that the sole plate (31) for resting the slab is fixed rigidly on the reinforcing members (32) of the concrete of the vessel well.

6. Closing slab as claimed in claim 4, characterized in that the lower end of the peripheral part (11) of the slab is fixed by bolting on a sole plate, itself anchored in the concrete of the vessel well.

7. Closing slab as claimed in any one of claims 1 to 6, characterized in that the webs (20, 21) for strengthening the central part (10) of the slab have a top angle close to 90°, their generatrices forming an angle close to 45° to the vertical.

8. Closing slab as claimed in any one of claims 1 to 7, characterized in that the passages for components in the slab consist of cylindrical shells (18, 19) fixed by welding to the upper sole plate and to the lower sole plate at each of their ends and to the frustoconical strengthening webs, along openings provided in the passages for the passage of the components.

9. Closing slab as claimed in any one of claims 1 to 8, characterized in that the frustoconical webs (20, 21) for strengthening the central part (10) of the slab are pierced with openings for filling the slab with concrete for protection.

10. Closing slab as claimed in any one of claims 1 to 9, characterized in that the shells (12, 14, 18, 24, 28), the sole plates (15, 16) and the strengthening webs (20, 21, 25) are made of a low alloy structural steel.

Fig 1

0 126 674

Fig 2